# EUROPEAN PATENT APPLICATION

(11) **EP 4 818 635 A1**
(43) Date of publication of application: **07.10.2026**
(21) Application number: 24902039.7
(22) Date of filing: 03.06.2024
(51) Int. Cl.: G01B 11/14, B05C 5/02

(54) **COATING DIE HEALTH INSPECTION METHOD, APPARATUS AND SYSTEM, AND STORAGE MEDIUM**

(30) Priority: 15.12.2023 CN 202311734262
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: HU, Ruixiang, Ningde, Fujian, 352100 (CN); JIN, Wenjing, Ningde, Fujian, 352100 (CN); HAN, Wucun, Ningde, Fujian, 352100 (CN); JING, Zhicheng, Ningde, Fujian, 352100 (CN); CHENG, Tao, Ningde, Fujian, 352100 (CN); JIN, Aiming, Ningde, Fujian, 352100 (CN); XIE, Guotao, Ningde, Fujian, 352100 (CN)
(74) Representative: Kraus & Lederer PartGmbB
(86) International application number: PCT/CN2024/097041
(87) International publication number: WO 2025/123610

(57) **Abstract**

A coating die health inspection method, comprising: step S101, on the basis of first distance data between a first position of a coating die (01) and a back roller (02) and second distance data between a second position of the coating die (01) and the back roller (02), obtaining a first parameter representing the wear of the coating die (01) and a second parameter representing the parallelism between the coating die (01) and the back roller (02); and step S102, determining the health of the coating die (01) on the basis of the first parameter and the second parameter. Real-time health inspection of the coating die is achieved, and the inspection efficiency is high. Further provided are a coating die health inspection apparatus and system, an electronic device, and a computer-readable storage medium.

## Description

This application claims priority to the prior application with Application No. 202311734262.6, entitled "COATING DIE HEALTH INSPECTION METHOD, APPARATUS AND SYSTEM, AND STORAGE MEDIUM" and filed on December 15, 2023.

### TECHNICAL FIELD

This application pertains to the field of coating device technology, and specifically relates to a coating die health inspection method, apparatus and system, and a storage medium.

### BACKGROUND

A coating die is a critical component in a coating device, and directly affects coating quality and efficiency. As the number of uses increases, the coating die experiences wear. This not only affects coating effect, but may also increase production costs and cause device shutdown for maintenance. Therefore, health inspection on die wear is of great significance.

In the related art, health inspection of a coating die is mainly to estimate die wear by manually measuring dimensional changes of the die or inspecting changes in coating liquid flow rate. However, manual inspection requires stopping a coating process to disassemble the die, affecting production efficiency. Moreover, manual inspection is periodic and cannot monitor a wear condition of the die in real time. Consequently, a non-conforming die may remain in operation and produce unqualified products, affecting product quality. Therefore, the method of manually inspecting a health status of a coating die has hysteresis and low inspection efficiency.

It should be noted that the above statements are merely used to provide background information related to this application, and do not necessarily constitute prior art.

### SUMMARY

In view of the above problems, embodiments of this application propose a coating die health inspection method, apparatus, and system, and a storage medium. This application specifically solves the problem of low efficiency in existing coating die health inspection methods.

This application proposes a coating die health inspection method. The method includes: obtaining, based on first distance data between a first position of a coating die and a back roller and second distance data between a second position of the coating die and the back roller, a first parameter representing a wear amount of the coating die and a second parameter representing a parallelism between the coating die and the back roller; and determining a health degree of the coating die based on the first parameter and the second parameter.

With the above manner of acquiring the first distance data and the second distance data in real time, there is no need to stop mechanical operation, so production efficiency is not affected, and inspection efficiency is high. The first parameter representing the wear amount of the coating die and the second parameter representing the parallelism between the coating die and the back roller are obtained based on the first distance data and the second distance data. Since the wear amount of the coating die and the parallelism between the coating die and the back roller are important parameters reflecting the health degree of the coating die, high accuracy is achieved when determining the health degree of the coating die based on the first parameter and the second parameter.

In some embodiments of this application, the obtaining, based on first distance data between a first position of a coating die and a back roller and second distance data between a second position of the coating die and the back roller, a first parameter representing a wear amount of the coating die includes: obtaining a variation of the first distance data based on the first distance data at an initial time and the first distance data at a current time; obtaining a variation of the second distance data based on the second distance data at the initial time and the second distance data at the current time; and calculating an average value of the variation of the first distance data and the variation of the second distance data, and using the average value as the first parameter.

The above embodiment improves the calculation accuracy of the first parameter.

In some embodiments of this application, the obtaining, based on first distance data between a first position of a coating die and a back roller and second distance data between a second position of the coating die and the back roller, a second parameter representing a parallelism between the coating die and the back roller includes: calculating an absolute value of a difference between the first distance data at the current time and the second distance data at the current time, and using the absolute value of the difference as the second parameter.

In this embodiment, the absolute value of the difference is used as the second parameter, which more appropriately represents the parallelism between the coating die and the back roller, improving accuracy of inspection results.

In some embodiments of this application, the determining a health degree of the coating die based on the first parameter and the second parameter includes: obtaining a health value of the coating die based on the first parameter, the second parameter, and a preset weight, where the health value represents the health degree of the coating die.

The health value of the coating die obtained based on the first parameter, the second parameter, and the preset weight represents the health degree of the coating die to a great extent and is highly representative.

In some embodiments of this application, the method further includes: obtaining a wear speed of the coating die based on at least one of a historical health value, historical first distance data, or historical second distance data of the coating die; and predicting a remaining service duration of a current coating die based on the wear speed.

In this embodiment, the remaining service duration of the current coating die is predicted, thereby effectively guiding on-site personnel to prepare spare parts, avoiding unplanned downtime, and improving production efficiency.

In some embodiments of this application, the method further includes: in a case that the variation of the first distance data or the variation of the second distance data is greater than or equal to a preset threshold, determining that the coating die is in an unhealthy state.

By inspecting a wear amount on one side of the coating die, the phenomenon of uneven coating caused by excessive wear amount on one side of the coating die is reduced.

In some embodiments of this application, the method further includes: in a case that an operation signal of the coating die is received, performing a step of acquiring the first distance data between the first position of the coating die and the back roller and the second distance data between the second position of the coating die and the back roller, where the first distance data is obtained based on a first sensor installed at the first position of the coating die, and the second distance data is obtained based on a second sensor installed at the second position of the coating die.

Real-time data of the coating die during operation is acquired, increasing the volume of effective data and reducing the amount of calculation.

In some embodiments of this application, the method further includes: generating and displaying health status display information of the coating die based on the first distance data and the second distance data of the coating die; where the health status display information includes one or more of a first distance change trend graph, a second distance change trend graph, a parallelism change trend graph between the coating die and the back roller, and a health value change trend graph of the coating die.

This helps personnel to intuitively inspect the health status of the coating die.

According to a second aspect, a coating die health inspection apparatus is further provided. The apparatus includes: a calculation module configured to obtain, based on first distance data between a first position of a coating die and a back roller and second distance data between a second position of the coating die and the back roller, a first parameter representing a wear amount of the coating die and a second parameter representing a parallelism between the coating die and the back roller; and a health inspection module configured to determine a health degree of the coating die based on the first parameter and the second parameter.

According to a third aspect, an electronic device is further provided, including a memory, a processor, and a computer program stored on the memory and executable on the processor, where the processor runs the computer program to implement the method according to the first aspect.

According to a fourth aspect, a computer-readable storage medium is further provided, where a computer program is stored on the computer-readable storage medium, and the program is executed by a processor to implement the method according to any one of the first aspect.

The foregoing description is merely an overview of the technical solution of this application. For a better understanding of the technical means in this application such that they are implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a flowchart of a coating die health inspection method according to an embodiment of this application;
FIG. 2 is a schematic diagram of a positional relationship between a coating die and a back roller according to an embodiment of this application;
FIG. 3 is a health value change trend graph of a coating die according to an embodiment of this application;
FIG. 4 is a first distance change trend graph according to an embodiment of this application;
FIG. 5 is a parallelism change trend graph according to an embodiment of this application;
FIG. 6 is a schematic structural diagram of a coating die health inspection system according to an embodiment of this application;
FIG. 7 is a schematic structural diagram of an electronic device according to an embodiment of this application; and
FIG. 8 is a schematic diagram of a storage medium according to an embodiment of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means at least two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art understand specific meanings of these terms in the embodiments of this application as suitable to specific situations.

Currently, industrial production requires the use of a coating device to produce materials with specific functions. A coating die is a critical component in a coating device, and directly affects coating quality and efficiency. The coating die includes an upper die and a lower die. The upper die has an upper lip, and the lower die has a lower lip. A slurry is extruded from the upper and lower lips by the power provided by a screw pump. Moreover, a deformation amount of the upper lip is adjusted by adjusting a lip screw of the upper die to regulate a weight, thereby controlling a coating thickness of the slurry.

However, when the slurry flows out from the lips, continuous friction between the fluid and the lips causes varying degrees of wear on the lips of the upper and lower dies. As the service time of the coating die increases, the degree of wear becomes higher, and a gap between the coating die and the back roller also becomes larger, resulting in a growing coating thickness and affecting coating quality. As the wear continues, operators continuously manually adjust an installation structure of the coating die based on the coating thickness to control a distance between the coating die and the back roller, so as to meet a requirement for coating weight consistency. However, affected by mechanical installation accuracy, as well as external factors such as inconsistent wear and mechanical vibration, the coating die and the back roller cannot be fully parallel. As the service time of the coating die increases, the coating die deviates further from an optimal state, and the coating weight consistency deteriorates. Therefore, it is particularly critical to carry out health inspection of the coating die.

In the related art, health inspection of a coating die is mainly to estimate die wear by manually measuring dimensional changes of the die or inspecting changes in coating liquid flow rate. However, manual inspection requires stopping a coating process to disassemble the die, affecting production efficiency. Moreover, manual inspection is periodic and cannot monitor a wear condition of the die in real time. Consequently, a non-conforming die may remain in operation and produce unqualified products, affecting product quality. Therefore, the method of manually inspecting a health status of the coating die has hysteresis and low inspection efficiency.

In view of this, this embodiment provides a coating die health inspection method, to acquire two pieces of distance data between preset positions of a coating die and a back roller, and evaluate a wear amount of the coating die and a parallelism between the coating die and the back roller based on a variation of each piece of the distance data and a variation of a difference between the two pieces of distance data, thereby determining a health degree of the coating die. This method implements real-time inspection of the health degree of the coating die. Compared with manual inspection, this embodiment achieves higher inspection efficiency. Moreover, supported by sufficient data, this embodiment also achieves higher inspection accuracy and credibility.

The coating die health inspection method according to this embodiment may be applied to a coating scenario. A substrate is disposed between the coating die and the back roller. The back roller is driven by a motor to convey the substrate. The coating die is configured to apply slurry on the moving substrate, thereby obtaining a product coated with slurry. For example, in a manufacturing process of lithium batteries, coating technology is used to manufacture battery electrode sheets.

For ease of description, the following embodiments are described by using an example in which a coating die according to an embodiment of this application is used for manufacturing battery electrode sheets.

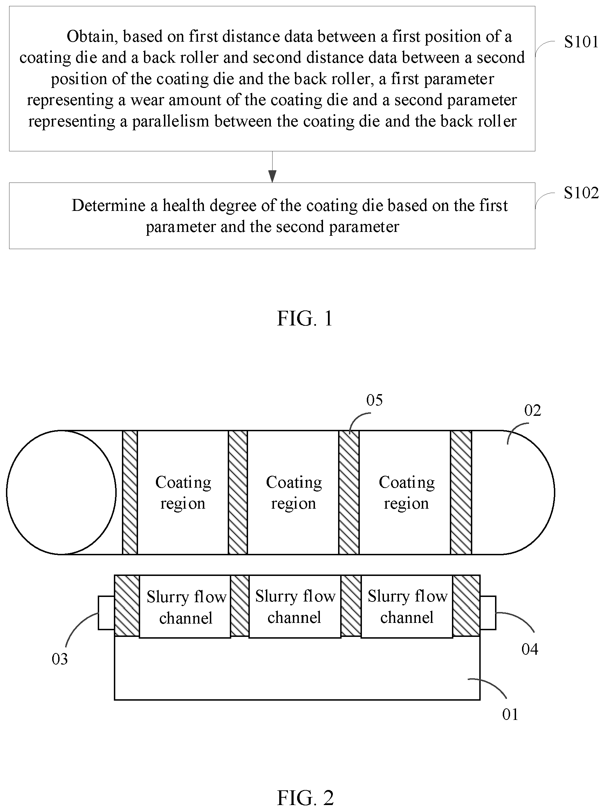

FIG. 1 is a flowchart of a coating die health inspection method according to an embodiment of this application. As shown in FIG. 1, the coating die health inspection method includes the following steps.

S101. Obtain, based on first distance data between a first position of a coating die and a back roller and second distance data between a second position of the coating die and the back roller, a first parameter representing a wear amount of the coating die and a second parameter representing a parallelism between the coating die and the back roller.

S102. Determine a health degree of the coating die based on the first parameter and the second parameter.

The method according to the embodiment of this application may be executed by an electronic device capable of inspecting a health status of the coating die. The electronic device may include but is not limited to a terminal, a server, or the like.

The first position and the second position are positions respectively at two end portions of the coating die. For example, the first position is a left end portion of the coating die, and the second position is a right end portion of the coating die.

FIG. 2 is a schematic diagram of a positional relationship between a coating die and a back roller according to an embodiment of this application. As shown in FIG. 2, the coating die 01 is disposed in parallel with the back roller, and the coating die 01 is disposed opposite the back roller 02. A first sensor 03 and a second sensor 04 are respectively arranged at two ends of the coating die 01. The first sensor 03 and the second sensor 04 are respectively installed at the first position and the second position at two ends of the coating die 01. Inspection signal emission directions of the first sensor 03 and the second sensor 04 are both perpendicular to the back roller 02. In this way, the first distance data between the first position of the coating die and the back roller 02 is obtained through the first sensor 03, and the second distance data between the second position of the coating die and the back roller 02 is obtained through the second sensor 04.

As shown in FIG. 2, when the coating die 01 is working, a slurry in a slurry flow channel is applied onto a substrate 05 to form multiple coating regions. A distance between the coating die 01 and the back roller 02 determines a slurry thickness of the coating region.

The first parameter represents the wear amount of the coating die. In one example, the wear amount may be a wear amount on one side of the coating die, for example, a wear amount on a side where the first position of the coating die is located, or a wear amount on a side where the second position of the coating die is located. The overall average wear amount of the coating die may also be calculated.

The second parameter represents the parallelism between the coating die and the back roller. It is understood that when the coating die is a newly installed coating die, its positional relationship with the back roller is parallel, that is, at an initial time, the first distance data and the second distance data are the same. However, as the coating die wears, the first distance data and the second distance data deviate. Therefore, the current parallelism between the coating die and the back roller, that is, the second parameter, is calculated based on initial first distance data, initial second distance data, real-time first distance data, and real-time second distance data.

Since the first parameter represents the wear amount of the coating die and the second parameter represents the parallelism between the coating die and the back roller, the two parameters reflect the current wear condition of the coating die. Therefore, high accuracy is achieved when determining the health degree of the coating die based on the first parameter and the second parameter.

With the above manner of acquiring the first distance data and the second distance data in real time, there is no need to stop mechanical operation, so production efficiency is not affected, and inspection efficiency is high. The first parameter representing the wear amount of the coating die and the second parameter representing the parallelism between the coating die and the back roller are obtained based on the first distance data and the second distance data. Since the wear amount of the coating die and the parallelism between the coating die and the back roller are important parameters reflecting the health degree of the coating die, high accuracy is achieved when determining the health degree of the coating die based on the first parameter and the second parameter.

In some embodiments of this application, the obtaining, based on first distance data between a first position of a coating die and a back roller and second distance data between a second position of the coating die and the back roller, a first parameter representing a wear amount of the coating die includes: obtaining a variation of the first distance data based on the first distance data at an initial time and the first distance data at a current time; obtaining a variation of the second distance data based on the second distance data at the initial time and the second distance data at the current time; and calculating an average value of the variation of the first distance data and the variation of the second distance data, and using the average value as the first parameter.

In an ideal state, the coating die is parallel to the back roller, so the first distance data at the initial time and the second distance data at the initial time are equal. However, in this embodiment, considering mechanical errors, the first distance data at the initial time and the second distance data at the initial time are separately obtained after the coating die is installed.

Based on the first distance data at the initial time and the first distance data at the current time, the variation of the first distance data is obtained, which represents a variation of the first position of the coating die relative to the back roller.

Based on the second distance data at the initial time and the second distance data at the current time, the variation of the second distance data is obtained, which represents a variation of the second position of the coating die relative to the back roller.

The coating die is an entity with a certain length. To achieve more accurate calculation results, in this embodiment, the average value of the variation of the first distance data and the variation of the second distance data is used as the first parameter. In other words, in this embodiment, an average value of a wear amount on the left side and a wear amount on the right side of the coating die as an overall wear amount of the coating die, thereby improving the calculation accuracy of the health degree of the coating die.

The above embodiment improves the calculation accuracy of the first parameter.

In some embodiments of this application, the obtaining, based on first distance data between a first position of a coating die and a back roller and second distance data between a second position of the coating die and the back roller, a second parameter representing a parallelism between the coating die and the back roller includes: calculating an absolute value of a difference between the first distance data at the current time and the second distance data at the current time, and using the absolute value of the difference as the second parameter.

In a state that the coating die is parallel to the back roller, the first distance data and the second distance data are equal. In a state that the coating die is not parallel to the back roller, the first distance data and the second distance data are not equal. Therefore, if the difference between the first distance data at the current time and the second distance data at the current time is 0, it indicates that the coating die is parallel to the back roller. If the difference between the first distance data at the current time and the second distance data at the current time is not 0, it indicates that the coating die is not parallel to the back roller, and a specific deviation degree is reflected by the absolute value of the difference between the first distance data at the current time and the second distance data at the current time.

Therefore, in this embodiment, the absolute value of the difference is used as the second parameter, which more appropriately represents the parallelism between the coating die and the back roller, improving accuracy of inspection results.

In some embodiments of this application, the determining a health degree of the coating die based on the first parameter and the second parameter includes: obtaining a health value of the coating die based on the first parameter, the second parameter, and a preset weight, where the health value represents the health degree of the coating die.

The first parameter represents the wear amount of the coating die, and the second parameter represents the parallelism between the coating die and the back roller. Both the wear amount and parallelism are important indicators reflecting the health degree of the coating die. In one example, preferably, preset weights of the first parameter and the second parameter are the same, that is, a weighting ratio of the first parameter and the second parameter is 1:1.

In another example, the preset weight may alternatively be manually set based on actual production conditions, which is not specifically limited herein.

Thus, the health value of the coating die obtained based on the first parameter, the second parameter, and the preset weight represent the health degree of the coating die to a great extent and is highly representative.

In some embodiments of this application, the coating die health inspection method further includes: obtaining a wear speed of the coating die based on at least one of a historical health value, historical first distance data, or historical second distance data of the coating die; and predicting a remaining service duration of a current coating die based on the wear speed.

In some scenarios, operators find that the coating die is no longer usable, only when the coating die is severely worn to an extent that causes an unexpected shutdown. However, by that time, an unexpected shutdown has already occurred, and the sudden shutdown requires operators to spend time preparing a new coating die, bringing significant losses to production.

The coating dies on the same production line operate in substantially identical working environments. Therefore, in the embodiments of this application, the wear speed of the coating die is calculated based on at least one of the historical health value of the coating die, the historical first distance data, or the historical second distance data; and the remaining service duration of the current coating die is predicted based on the wear speed.

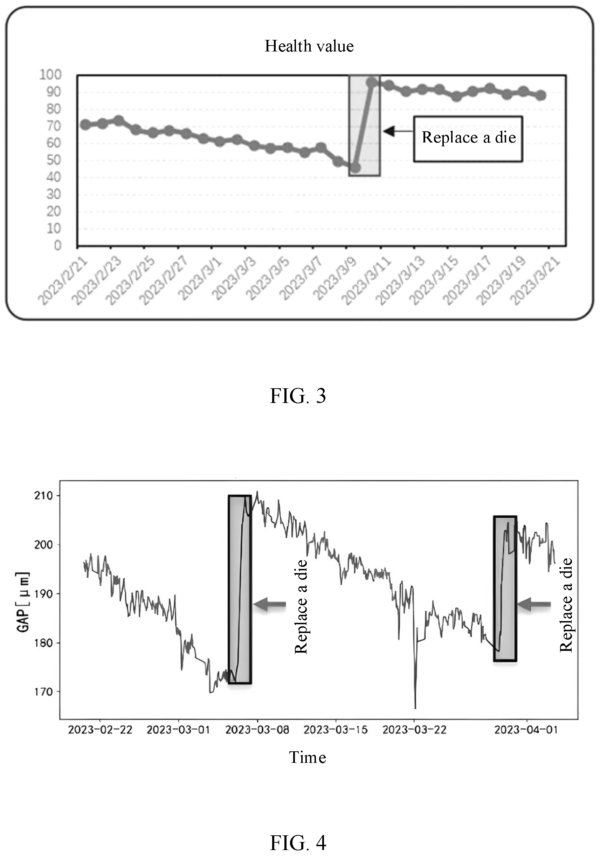

For example, the health value of the coating die may be recorded periodically according to the process in FIG. 1 to obtain a health value change trend graph of the coating die shown in FIG. 3. In the health value change trend graph, a horizontal axis represents time and a vertical axis represents the health value of the coating die. Then, the wear speed of the coating die is obtained based on a difference between an initial health value and a health value at replacement from the historical health values of the coating die, as well as a time span therebetween. Given the identical environments and identical models of the coating dies on the same production line, the wear speed is used to predict the remaining service duration of the current coating die.

As shown in FIG. 3, the health value of the coating die shows a downward trend with the increase of time. After the die is replaced, its health value approaches 100.

During calculation of the wear speed of the coating die based on the historical first distance data and the historical second distance data, the wear speed may be obtained based on a time required for the variation of the first distance data to change from 0 to a preset threshold and the preset threshold, or the wear speed may be obtained based on a time required for the variation of the second distance data to change from 0 to a preset threshold and the preset threshold.

In other words, a slope value may be obtained based on a target variation allowed within the service life of the coating die and its actual time, and used as the wear speed.

In this embodiment, the remaining service duration of the current coating die is predicted, thereby effectively guiding on-site personnel to prepare spare parts, avoiding unplanned downtime, and improving production efficiency.

In some embodiments of this application, the coating die health inspection method further includes: in a case that the variation of the first distance data or the variation of the second distance data is greater than or equal to a preset threshold, determining that the coating die is in an unhealthy state.

If the variation of the first distance data or the variation of the second distance data is greater than or equal to the preset threshold, it indicates that the wear amount on one side of the coating die has exceeded the preset threshold for the wear amount of the coating die, and the coating die no longer meets a requirement for coating weight consistency. In this case, the coating die is determined to be in an unhealthy state.

By inspecting a wear amount on one side of the coating die, the phenomenon of uneven coating caused by excessive wear amount on one side of the coating die is reduced.

In some embodiments of this application, the coating die health inspection method further includes: in a case that an operation signal of the coating die is received, performing a step of acquiring the first distance data between the first position of the coating die and the back roller and the second distance data between the second position of the coating die and the back roller.

The first distance data is obtained based on a first sensor installed at the first position of the coating die, and the second distance data is obtained based on a second sensor installed at the second position of the coating die. The first sensor and the second sensor are shown in FIG. 2.

In a case that an operation signal of the coating die is received, the step of acquiring the first distance data and the second distance data is performed. This facilitates obtaining of real-time data of the coating die during operation, increasing the volume of effective data and reducing the amount of calculation.

In some embodiments of this application, the coating die health inspection method further includes: generating and displaying health status display information of the coating die based on the first distance data and the second distance data of the coating die, where the health status display information includes one or more of a first distance change trend graph, a second distance change trend graph, a parallelism change trend graph between the coating die and the back roller, and a health value change trend graph of the coating die.

The first distance change trend graph may take time as a horizontal axis and real-time values of the first distance data as a vertical axis to obtain the first distance change trend graph shown in FIG. 4.

Similarly, the second distance change trend graph may take time as a horizontal axis and real-time values of the second distance data as a vertical axis to obtain the first distance change trend graph.

As the service time of the coating die increases, the coating die tilts, that is, the coating die is no longer parallel to the back roller. An end where the first sensor is located becomes closer to the back roller, while an end where the second sensor is located becomes farther from the back roller. Consequently, the first distance data becomes smaller and the second distance data becomes larger. Therefore, as shown in FIG. 4, the first distance data becomes smaller, but after the die is replaced, the first distance data returns to be within a preset range.

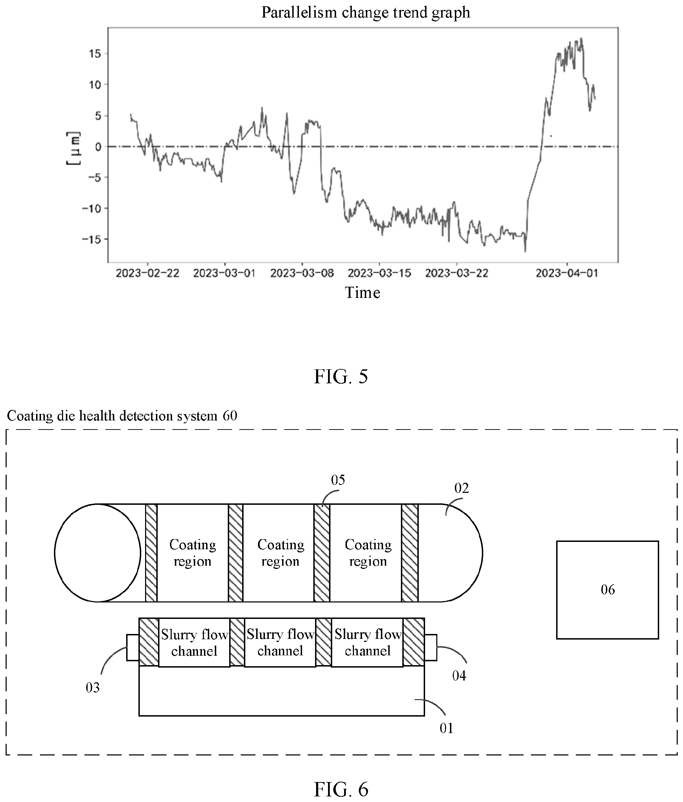

FIG. 5 is a parallelism change trend graph according to an embodiment of this application. It is understood that in this embodiment, the second parameter is the absolute value of the difference between the first distance data at the current time and the second distance data at the current time, which represents a variation of the parallelism of the coating die. To better display a height difference between the two ends of the coating die, in this embodiment, the parallelism change trend graph is directly presented using the difference between the first distance data at the current time and the second distance data at the current time. That is, as shown in FIG. 5, time is taken as the horizontal axis and differences between the first distance data at the current time and the second distance data at the current time are taken as the vertical axis to obtain the parallelism change trend graph shown in FIG. 5. For example, if the difference between the first distance data at the current time and the second distance data at the current time is 5, which is a positive number, it indicates that the first distance data is greater than the second distance data, meaning that the end of the coating die where the first sensor is located is farther from the back roller. This reflects the actual condition of the coating die more accurately.

Generating different health status display information helps operators to intuitively inspect the health status of the coating die.

In the embodiments of this application, real-time inspection of the health degree of the coating die is realized. Compared with conventional measurement methods, this method does not require manual measurement, reduces workload, and improves the inspection efficiency of the health degree of the coating die. This method implements real-time monitoring and evaluation of the wear condition of the die, and guides operators to take timely measures for maintenance or replacement, improving coating quality and production efficiency. This method implements accurate prediction of the remaining service life of the die when it reaches the wear specification for replacement, and guides operators to prepare spare parts and plan replacement in advance, avoiding production losses caused by unexpected shutdown.

The above descriptions of the embodiments tend to emphasize the differences between the embodiments. For the same or similar points, reference may be made to one another. For the sake of brevity, details are not repeated herein.

The following uses a specific example to describe the coating die health inspection method according to some embodiments of this application. First distance data is acquired in real time through a first sensor, and second distance data is acquired in real time through a second sensor. Based on first distance data at an initial time and first distance data at a current time, a variation of the first distance data is obtained; and based on second distance data at the initial time and second distance data at the current time, a variation of the second distance data is obtained. An average value of the variation of the first distance data and the variation of the second distance data is calculated, and the average value is used as a first parameter. An absolute value of the difference between the first distance data at the current time and the second distance data at the current time is calculated, and the absolute value of the difference is used as a second parameter. Based on the first parameter, the second parameter, and a preset weight, a health value of a coating die is obtained, thereby obtaining a health value distribution graph of the coating die shown in FIG. 3.

In one example, coating die data from an entire plant is obtained, thereby realizing inspection of the health status of the coating dies across the entire plant.

In one example, assuming that a maximum threshold for the wear amount of the coating die is 30 µm, a time required for the variation of the first distance data to change from 0 to 30 µm is used as a reference life cycle of the coating die, thereby predicting the remaining service life of the coating die.

One or more of a first distance change trend graph, a second distance change trend graph, a parallelism change trend graph between the coating die and the back roller, and a health value change trend graph of the coating die may further be generated and displayed based on the first distance data and the second distance data.

As seen from above, the method in the embodiments of this application does not require manual measurement, reduces workload, and improves the inspection efficiency of the health degree of the coating die. This method implements real-time monitoring and evaluation of the wear condition of the die, and guides operators to take timely measures for maintenance or replacement, improving coating quality and production efficiency. This method implements accurate prediction of the remaining service life of the die when it reaches the wear specification for replacement, and guides operators to prepare spare parts and plan replacement in advance, avoiding production losses caused by unexpected shutdown.

The above descriptions of the embodiments tend to emphasize the differences between the embodiments. For the same or similar points, reference may be made to one another. For the sake of brevity, details are not repeated herein.

Some embodiments of this application further provide a coating die health inspection system. Referring to FIG. 6, the coating die health inspection system 60 includes: a coating die 01, a first sensor 03, a second sensor 04, a back roller 02, and a processor 06; where the first sensor 03 and the second sensor 04 are respectively installed at a first position and a second position at two ends of the coating die 01, the coating die 01 is disposed opposite the back roller 02, and inspection signal emission directions of the first sensor 03 and the second sensor 04 are both perpendicular to the back roller 02.

When the coating die 01 is working, a slurry in a slurry flow channel is applied onto a substrate 05 to form multiple coating regions. A distance between the coating die 01 and the back roller 02 determines a slurry thickness of the coating region.

The first sensor 03 is configured to acquire first distance data between the first position and the back roller 02. The second sensor is configured to acquire second distance data between the second position and the back roller 02. The processor 06 is configured to obtain, based on the first distance data and the second distance data, a first parameter representing a wear amount of the coating die and a second parameter representing a parallelism between the coating die and the back roller; and determine a health degree of the coating die based on the first parameter and the second parameter.

In some embodiments of this application, the processor 06 is further configured to obtain a variation of the first distance data based on the first distance data at an initial time and the first distance data at a current time; obtain a variation of the second distance data based on the second distance data at the initial time and the second distance data at the current time; and calculate an average value of the variation of the first distance data and the variation of the second distance data, and use the average value as the first parameter.

In some embodiments of this application, the processor 06 is further configured to calculate an absolute value of a difference between the first distance data at the current time and the second distance data at the current time, and use the absolute value of the difference as the second parameter.

In some embodiments of this application, the processor 06 is further configured to obtain a health value of the coating die based on the first parameter, the second parameter, and a preset weight, where the health value represents the health degree of the coating die.

In some embodiments of this application, the processor 06 is further configured to obtain a wear speed of the coating die based on at least one of a historical health value, historical first distance data, or historical second distance data of the coating die; and predict a remaining service duration of a current coating die based on the wear speed.

In some embodiments of this application, the processor 06 is further configured to: in a case that the variation of the first distance data or the variation of the second distance data is greater than or equal to a preset threshold, determine that the coating die is in an unhealthy state.

In some embodiments of this application, the processor 06 is further configured to: in a case that an operation signal of the coating die is received, perform a step of acquiring the first distance data between the first position of the coating die and the back roller and the second distance data between the second position of the coating die and the back roller, where the first distance data is obtained based on a first sensor installed at the first position of the coating die, and the second distance data is obtained based on a second sensor installed at the second position of the coating die.

In some embodiments of this application, the processor 06 is further configured to generate and display health status display information of the coating die based on the first distance data and the second distance data of the coating die; where the health status display information includes one or more of a first distance change trend graph, a second distance change trend graph, a parallelism change trend graph between the coating die and the back roller, and a health value change trend graph of the coating die.

The coating die health inspection system according the above embodiments of this application shares the same inventive concept as the method according to the embodiments of this application, and achieves the same beneficial effects as the method adopted, executed, or implemented by an application program stored therein.

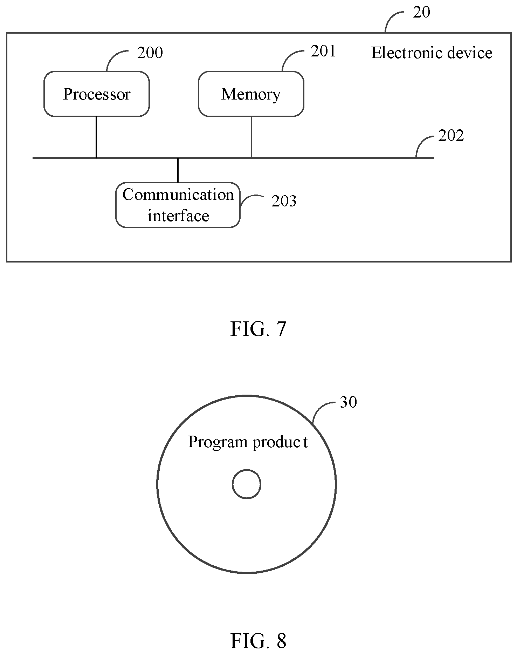

Another embodiment of this application further provides an electronic device to perform the foregoing coating die health inspection method. FIG. 7 is a schematic diagram of an electronic device according to some implementations of this application. As shown in FIG. 7, the electronic device 20 includes: a processor 200, a memory 201, a bus 202, and a communication interface 203, where the processor 200, the communication interface 203, and the memory 201 are connected via the bus 202; the memory 201 stores a computer program executable on the processor 200; and when the processor 200 runs the computer program, the method according to any one of the foregoing implementations of this application is executed.

The memory 201 may include a high-speed random access memory (RAM: Random Access Memory), and may also include a non-volatile memory (non-volatile memory), such as at least one disk memory. A communication connection between the system network element and at least one of other network elements is realized via at least one communication interface 203 (which may be wired or wireless), and the Internet, a wide area network, a local area network, a metropolitan area network, or the like may be used.

The bus 202 may be an ISA bus, a PCI bus, an EISA bus, or the like. The bus may be classified into an address bus, a data bus, a control bus, and the like. The memory 201 is configured to store a program, and the processor 200 executes the program after receiving an execution instruction. The coating die health inspection method disclosed in any one implementation of the foregoing embodiments of this application may be applied to the processor 200 or implemented by the processor 200.

The processor 200 may be an integrated circuit chip having a signal processing capability. In an implementation process, the steps of the methods may be implemented by an integrated logical circuit of hardware in the processor 200, or by a software instruction. The processor 200 may be a general-purpose processor, including a central processing unit (Central Processing Unit, CPU for short), a network processor (Network Processor, NP for short), or the like; or may be a digital signal processor (DSP), an application-specific integrated circuit (ASIC), a field-programmable gate array (FPGA) or another programmable logic device, a discrete gate or transistor logic device, or a discrete hardware component. The methods, steps, and logical block diagrams disclosed in the embodiments of this application are implemented or performed. The general-purpose processor may be a microprocessor, or the processor may be any conventional processor or the like. Steps of the methods disclosed with reference to the embodiments of this application may be directly performed and accomplished by a hardware decoding processor, or may be performed and accomplished by a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 201, and the processor 200 reads information in the memory 201 and completes the steps of the foregoing methods in combination with hardware of the processor.

The electronic device according to the embodiment of this application shares the same application concept with the coating die health inspection method according to the embodiments of this application, and achieves the same beneficial effects as the method adopted, executed, or implemented therein.

An embodiment of this application further provides a computer-readable storage medium corresponding to the coating die health inspection method according to the foregoing embodiments. Referring to FIG. 8, the computer-readable storage medium shown is a compact disc 30, on which a computer program (that is, a program product) is stored. When the computer program is run by a processor, the coating die health inspection method according to any of the foregoing embodiments may be executed.

It should be noted that examples of the computer-readable storage medium may further include, but are not limited to, a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory, or another optical or magnetic storage media, which are not described herein.

The computer-readable storage medium according to the foregoing embodiment of this application shares the same application concept with the coating die health inspection method according to the embodiments of this application, and achieves the same beneficial effects as the method adopted, executed, or implemented by an application program stored therein.

It should be noted that:
In this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art may clearly understand that the method in the foregoing embodiments is implemented through software on a necessary hardware platform or certainly through hardware only, but in many cases, the former is the more preferred implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments may be combined in any manner. This application is not limited to the specific embodiments disclosed in this specification but includes all technical solutions falling within the scope of the claims.

## Claims

1. A coating die health inspection method, wherein the method comprises:
obtaining, based on first distance data between a first position of a coating die and a back roller and second distance data between a second position of the coating die and the back roller, a first parameter representing a wear amount of the coating die and a second parameter representing a parallelism between the coating die and the back roller; and
determining a health degree of the coating die based on the first parameter and the second parameter.

2. The coating die health inspection method according to claim 1, wherein the obtaining, based on first distance data between a first position of a coating die and a back roller and second distance data between a second position of the coating die and the back roller, a first parameter representing a wear amount of the coating die comprises:
obtaining a variation of the first distance data based on the first distance data at an initial time and the first distance data at a current time;
obtaining a variation of the second distance data based on the second distance data at the initial time and the second distance data at the current time; and
calculating an average value of the variation of the first distance data and the variation of the second distance data, and using the average value as the first parameter.

3. The coating die health inspection method according to claim 1 or 2, wherein the obtaining, based on first distance data between a first position of a coating die and a back roller and second distance data between a second position of the coating die and the back roller, a second parameter representing a parallelism between the coating die and the back roller comprises:
calculating an absolute value of a difference between the first distance data at the current time and the second distance data at the current time, and using the absolute value of the difference as the second parameter.

4. The coating die health inspection method according to any one of claims 1 to 3, wherein the determining a health degree of the coating die based on the first parameter and the second parameter comprises:
obtaining a health value of the coating die based on the first parameter, the second parameter, and a preset weight, wherein the health value represents the health degree of the coating die.

5. The method according to any one of claims 1 to 4, wherein the method further comprises:
obtaining a wear speed of the coating die based on at least one of a historical health value, historical first distance data, or historical second distance data of the coating die; and
predicting a remaining service duration of a current coating die based on the wear speed.

6. The coating die health inspection method according to any one of claims 1 to 5, wherein the method further comprises:
in a case that the variation of the first distance data or the variation of the second distance data is greater than or equal to a preset threshold, determining that the coating die is in an unhealthy state.

7. The coating die health inspection method according to any one of claims 1 to 6, wherein the method further comprises:
in a case that an operation signal of the coating die is received, performing a step of acquiring the first distance data between the first position of the coating die and the back roller and the second distance data between the second position of the coating die and the back roller, wherein the first distance data is obtained based on a first sensor installed at the first position of the coating die, and the second distance data is obtained based on a second sensor installed at the second position of the coating die.

8. The coating die health inspection method according to any one of claims 1 to 7, wherein the method further comprises:
generating and displaying health status display information of the coating die based on the first distance data and the second distance data of the coating die;
wherein the health status display information comprises one or more of a first distance change trend graph, a second distance change trend graph, a parallelism change trend graph between the coating die and the back roller, and a health value change trend graph of the coating die.

9. A coating die health inspection apparatus, wherein the apparatus comprises:
a calculation module configured to obtain, based on first distance data between a first position of a coating die and a back roller and second distance data between a second position of the coating die and the back roller, a first parameter representing a wear amount of the coating die and a second parameter representing a parallelism between the coating die and the back roller; and
a health inspection module configured to determine a health degree of the coating die based on the first parameter and the second parameter.

10. A coating die health inspection system, comprising: a coating die, a first sensor, a second sensor, a back roller, and a processor; wherein the first sensor and the second sensor are respectively installed at a first position and a second position at two ends of the coating die, the coating die is disposed opposite the back roller, and inspection signal emission directions of the first sensor and the second sensor are both perpendicular to the back roller;
the first sensor is configured to acquire first distance data between the first position and the back roller; the second sensor is configured to acquire second distance data between the second position and the back roller; and
the processor is configured to obtain, based on the first distance data and the second distance data, a first parameter representing a wear amount of the coating die and a second parameter representing a parallelism between the coating die and the back roller; and determine a health degree of the coating die based on the first parameter and the second parameter.

11. An electronic device, comprising a memory, a processor, and a computer program stored on the memory and executable on the processor, wherein the processor runs the computer program to implement the coating die health inspection method according to any one of claims 1 to 8.

12. A computer-readable storage medium, wherein a computer program is stored on the computer-readable storage medium, and the program is executed by a processor to implement the coating die health inspection method according to any one of claims 1 to 8.
